# EUROPEAN PATENT SPECIFICATION

(11) **EP 3 660 243 B1**
(45) Date of publication and mention of the grant of the patent: **27.09.2023**
(21) Application number: 20153434.4
(22) Date of filing: 24.07.2017
(51) Int. Cl.: E04H 15/08, F16B 47/00, F16B 5/06

(54) **SHELTER ATTACHMENT SYSTEM**
SCHUTZDACHBEFESTIGUNGSSYSTEM
SYSTÈME DE FIXATION D'ABRI

(30) Priority: 22.07.2016 GB 201612772
(43) Date of publication of application: 03.06.2020
(62) Divisional of application: 17182875.9
(73) Proprietor: Dometic Sweden AB, 171 54 Solna (SE)
(72) Inventor: BARROW, Stuart, Sudbury, Essex CO10 8AS (GB)
(74) Representative: Dummett Copp LLP

(56) References cited:
- DE-C- 531 903
- US-A- 3 068 046
- US-A1- 2006 138 292

## Description

### BACKGROUND

### a. Field of the Invention

This invention relates to devices and a method for securing a shelter to a rigid structure, and in particular relates to devices and a method for securing a flexible panel of an awning to a structure such as a caravan.

### b. Related Art

Awnings are often attached to a variety of structures such as caravans, motorhomes, buildings and boats to provide an area of protection. The awnings are traditionally attached along an upper edge by a keder attachment system. This comprises a keder beading that is received in a keder track or channel. Typically the keder beading will be attached to an edge of the awning and the keder track will be connected to the structure, e.g. a roof or upper section of a caravan. The awning is connected to the structure by sliding the keder beading through the track, which is often in the form of an aluminium awning channel. This system can, therefore, provide a secure and weather-tight seal between an awning roof and a side panel of a caravan or motorhome.

Typically the sides of a lightweight awning do not have any direct means of attachment to the structure, but are held in position by pegging or otherwise securing a bottom corner or edge of the awning to the ground to create enough tension to form a reasonable wind and weatherproof seal between the side of the awning and the structure.

It is known to position an upright pole proximate an edge of the awning adjacent to the structure. One example of an upright pole is a telescopic pole with a spike at a first end or base and a plate element at a second end or top. The plate element fits into a pocket in a top corner of the awning, and the base of the pole is seated on or protrudes through a lower part of the awning. This creates tension in the side panel of the awning proximate the edge. In some cases it is known to provide a vertical strip of foam padding sewn into a vertical edge of the awning. The upright pole is extended such that the awning panel is under tension and the pole is pushed against the foam padding which in turn is pressed against a surface of the structure, such as the side of a caravan. This helps to create a weatherproof seal between the side of the awning and the structure. The upright pole may then be secured in position with pre-fixed ties.

DE 531903 discloses a securing device in the form of a suction cup holder for an adjustable mirror. US 2006/138292 discloses a holding device having a suction-type plate assembly. The holding device may be used to support a bracket or the like. US 3,068,046 discloses an automobile awning that is secured to an automobile by a plurality of securing devices. Some of these securing devices include a suction cup for securing to a part of the automobile.

It is an aim of the present invention to provide an additional or alternative means of securing an awning to a structure to assist in creating a weatherproof seal between a part of the awning and the structure.

### SUMMARY OF THE INVENTION

According to a first aspect of the present invention there is provided an attachment device according to appended claim 1.

Preferably the anchor element comprises an anchor element for securing to a substantially vertical surface of the rigid structure.

The anchor element may comprise a threaded post.

Preferably, in use, the anchor element is secured to said surface and the threaded post extends away from the second surface whereby said post extends in a direction away from the surface of the structure when the anchor element is secured to the structure.

Preferably the clamping element comprises a threaded recess or bore for receiving and engaging with the threaded post.

The first surface therefore provides a suction surface of the suction disc.

The shelter will typically be in the form of a canopy or awning that may include a roof panel and one or more side panels. It is envisaged that the attachment device will be used to secure an edge region of a side panel to a surface of the rigid structure to increase the resistance of the shelter to the elements such as wind and rain.

In particular, the edge region may be a return portion or strip of the flexible panel oriented at right angles of a main or side wall portion of the flexible panel, the main portion therefore being adapted to extend away from said substantially vertical surface and the return portion or strip being adapted to extend parallel with said surface, in order to reduce drafts and provide weather proofing.

The rigid structure will typically be a caravan or motorhome, with the canopy or awning extending from one side of the caravan or motorhome. The attachment device may, therefore, be used to secure an edge region of a side panel of the awning or canopy to a side of the caravan or motorhome to provide a weatherproof shelter.

The means for securing the anchor element to the structure is preferably designed to allow the anchor element to be repeatedly attached to and removed from the structure. As such, it is desirable if the anchor element is surface mounted to the structure, and it is particularly desirable for the securing means to be nondestructive. This means that the integrity of the surface of the rigid structure does not have to be compromised to secure the anchor element to the structure.

The anchor element is secured to the structure by means of suction adhesion in which a partial vacuum is formed between the anchor element and the structure. It is desirable for the anchor element to connect directly to a part of the surface of the structure without requiring an additional mounting element to be provided on the structure. This allows the anchor element, and therefore the attachment device, to be secured to any required part of the structure and to be freely repositioned when necessary.

The connecting means comprises a projection that extends in a direction away from the surface of the structure when the anchor element is secured to the structure. The projection is in the form of a threaded post that engages with a complementary female threaded recess or opening in the clamping element. The flexible panel of the shelter is provided with a hole through which the post extends. In this way, when the flexible panel is engaged with the shelter, at least a part of the anchor element is primarily located on a first side of the flexible panel and the clamping element is primarily located on a second opposite side of the flexible panel, with the post extending through the panel.

In order to form a reasonably weatherproof connection and to reduce the possibility of tearing the flexible panel, it is advantageous if the attachment device clamps a part of the shelter over an area of the flexible panel. Accordingly, the anchor element and clamping element may include clamping surfaces between which the flexible panel is gripped.

The attachment device comprises a grip element. This locates between at least a part of the anchor element and the clamping element. The anchor element is secured to the structure by forming a partial vacuum between the suction surface of the anchor element and a surface of the structure. The grip element is shaped and configured to allow a central region of the suction surface to be pulled in a direction away from the surface of the structure to create the partial vacuum while an edge region of the suction surface remains in contact with the surface of the structure.

The grip element may be permanently attached to the clamping element or may be separate from but engageable with the clamping element. Typically, the flexible panel of the shelter will be clamped between the grip element and a part of the anchor element. As such, the grip element may include a clamping surface.

The grip element comprises a dome-shaped disc. The grip element comprises a flange configured such that, in use, the flexible panel is clamped between the flange and a part of the anchor element. The flange preferably extends radially outwards from the dome-shaped disc, and w most preferably has opposite annular surfaces for making gripping contact with, on the one hand, a surface of the flexible panel and, on the other hand a clamping surface of the clamping element.

In a preferred embodiment of the invention, the clamping element is a cap, and the clamping surface of the clamping element is a circular rim of the cap.

The cap preferably has a substantially concave interior with a volume sufficient to accommodate the dome-shaped disc when the clamping element is clamped to the grip element.

The anchor element and the clamping element are preferably separate and distinct elements of the attachment device. However, in some embodiments the clamping element may be movably connected to the anchor element. The connection between the anchor element and the clamping element may be by means of a strap or hinge.

Also according to a second aspect of the present invention there is provided an assembly according to appended claim 8.

Typically a plurality of attachment devices will be used to secure a length of the flexible panel to the structure. The attachment devices will be spaced apart along an edge region of the panel, and the flexible panel may, therefore, include a corresponding plurality of holes spaced apart along an edge region of the panel.

The present invention also provides a method according to appended claim 10 of securing a flexible panel of a shelter to a rigid structure.

In preferred embodiments the anchor element includes connecting means in the form of a threaded post that engages with a complementary female threaded recess or opening in the clamping element. The flexible panel of the shelter is provided with a hole through which the post extends. As such, the method comprises attaching the anchor element to the surface of the structure such that the post extends in a direction away from the surface, positioning the flexible panel over the anchor element such that the post protrudes through the hole in the flexible panel, and engaging the clamping element with the post of the anchor element to clamp the flexible panel between a part of the anchor element and a part of the clamping element.

The method may further comprise positioning a grip element of the attachment device between the flexible panel and the clamping element before engaging the clamping element with the anchor element. In these embodiments a part of the flexible panel is clamped between the anchor element and the grip element.

In embodiments in which the anchor element comprises a threaded post for engagement with the clamping element, the method preferably further comprises positioning the grip element of the attachment device such that the threaded post extends through an aperture in the grip element.

As described above, it is envisaged that a plurality of attachment devices will be used to secure a length of a flexible panel. Accordingly, the method preferably comprises attaching a plurality of anchor elements to a surface of the structure in a spaced apart configuration; locating an edge region of the flexible panel between the anchor elements and a plurality of clamping elements; and engaging each of the clamping elements with a respective one of the anchor elements such that the edge region of the flexible panel is clamped between the anchor elements and the clamping elements along a length of the edge region.

### BRIEF DESCRIPTION OF THE DRAWINGS

The invention will now be further described by way of example only and with reference to the accompanying drawings, in which:
Figure 1 shows part of a side panel of an awning secured to a side of a caravan, an edge of the awning being secured by means of attachment devices according to the present invention;
Figure 2 shows an attachment device according to the present invention securing a part of an awning to a structure;
Figure 3 is an exploded view of an attachment device according to a preferred embodiment of the present invention; and
Figure 4 is a further exploded view of the attachment device of Figure 3.

### DETAILED DESCRIPTION

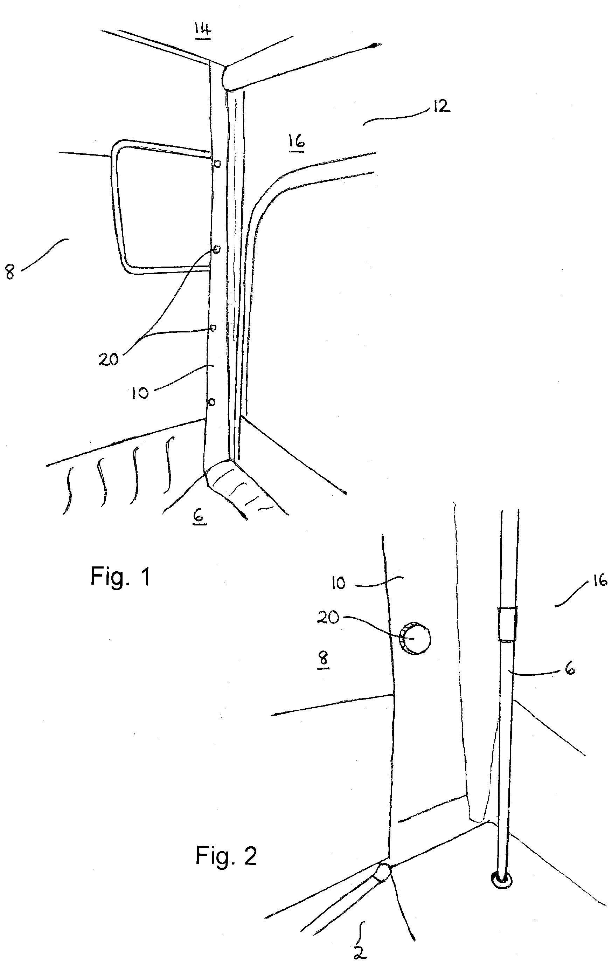

Figure 1 illustrates a plurality of attachment devices 20 according to the invention used to secure an edge region 10 of an awning 12 to a caravan 8. The awning 12 comprises a flexible roof panel 14 that is secured along one edge to an upper part of the side of the caravan 8 and a flexible side panel 16 that extends substantially vertically between the roof panel 14 and the ground 2. The side panel 16 comprises along one edge an edge region or strip 10, which provides a 90° return so that the edge region can be located substantially flush against the side of the caravan. The awning 12 provides are area outside but adjacent to the caravan 8 which is sheltered from the elements such as wind and rain. The flexible panels 14, 15, 16 of the awning 12 will typically be made from canvas or a suitable polymeric material.

To improve the degree of shelter afforded by the awning 12, the attachment devices 20 secure the edge region 10 of the side panel 16 of the awning 12 against the side of the caravan 8, to reduce the amount of air flow between the awning 12 and the side of the caravan 8 and to create a relatively weatherproof seal between the side panel 16 and the caravan 8. The attachment devices 20 secure the flexible side panel 16 to the side of the caravan 8 at discrete points along the length of the edge 10 of the side panel 16. It will be appreciated that it is desirable if the sections of the edge region 10 of the side panel 16 between the attachment devices 20 are pulled taut so that the edge region 10 lies against the side of the caravan 8 over a significant portion of its length.

The attachment devices 20 each comprise an anchor element 22 that is attached to a surface of the caravan 8 and a clamping element 24 that engages with the anchor element 22 to clamp the flexible panel 16 of the awning 12 between the anchor element 22 and the clamping element 24. The anchor element 22 is preferably removeably attached to the surface of the caravan 8 so that the whole of the attachment device 20 can be removed when not in use. Furthermore, it is desirable if the anchor element 22 is surface mounted and does not require any holes or notches to be formed in the surface of the caravan 8. This not only means that the integrity of the structure of the caravan 8 is maintained, but also means that the attachment devices 20 can be attached to the caravan 8 in any suitable location on the surface of the caravan 8 and may be attached in different positions each time they are used.

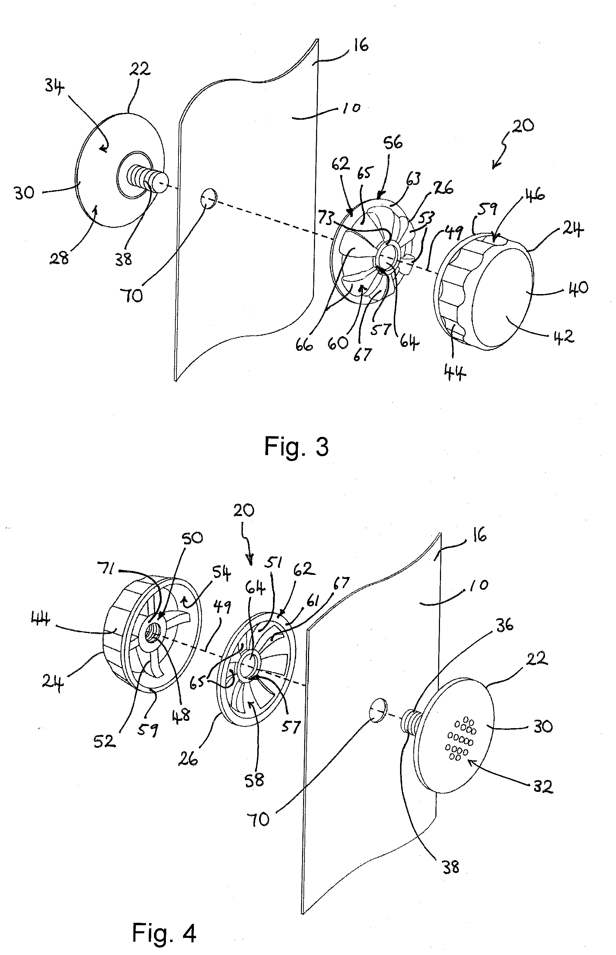

A preferred example of an attachment device 20 according to the present invention is shown in Figures 3 and 4. As described above, the attachment device 20 comprises an anchor element 22 and a clamping element 24. In this embodiment, the attachment device 20 also includes a grip element 26 that is located between the anchor element 22 and the clamping element 24.

The anchor element 22 comprises means 28 for securing the anchor element 22 to a surface of a caravan 8. The securing means 28 is in the form of a substantially circular suction disc or suction cup 30. The suction disc 30 comprises a first surface 32 which, in use, contacts the surface of the caravan 8, and an opposite second surface 34.

Connecting means 36 in the form of a post 38 projects from the second surface 34 of the suction disc 30. The post 38 extends from a central part of the suction disc 30 in a direction away from the first surface 32 of the disc 30. The post 38 is threaded for engagement with the clamping element 24.

The clamping element 24 is in the form of a cap 40 having a substantially circular cover plate 42 and a substantially cylindrical side wall 44 extending from a peripheral edge of the cover plate 42. An outer surface 46 of the side wall 44 is formed into a series of ridges and grooves to provide a gripping surface. In use, a user grips the outer surface 46 of the cap 40 to rotate the clamping element 24 with respect to the anchor element 22 as described below. The clamping element 24 further comprises means for engaging with the anchor element 22. In particular, the clamping element 24 includes a threaded recess or bore 48 that is designed to engage with the threaded post 38 of the anchor element 22. The male threaded post 38 of the anchor element 22 and the female threaded bore 48 of the clamping element 24 allows the clamping element 24 to be repeatedly engaged with and removed from the anchor element 22.

In this embodiment the threaded bore 48 is formed in a post 50 that extends from a central region of the cover plate 42 in the same direction as the side wall 44. The bore 48 extends along a longitudinal axis 49 of the post 50 which is substantially perpendicular to the plane of the cover plate 42. A plurality of ribs 52 extends radially outwardly from the post 50 to an internal surface 54 of the side wall 44. The ribs 52 are spaced apart around the circumference of the post 50.

The grip element 26 comprises a curved or dome-shaped disc 56 having a first, substantially concave surface 58 and a second, substantially convex surface 60. A radial flange 62 extends from a circumferential edge of the curved disc 56, and the diameter of an outer edge of the flange 62 is substantially the same as a diameter of the suction disc 30 of the anchor element 22. The flange has opposite first and second annular surfaces, the first annular surface 61 facing towards the flexible panel and the second annular surface 63 facing towards the cap 40. The grip element 26 further includes a central aperture 64 in the curved disc 56 that extends fully through the thickness of the disc 56. The aperture 64 is sized to receive the threaded post 38 with a clearance fit. The dome-shaped disc 56 of the grip element 26 will typically be made from a suitable rigid elastomeric material, and is preferably made from polypropylene.

The dome-shaped disc 56 comprises a hub 57 around the aperture 64. A region of the curved disc 56 between the aperture 64 and the flange 62 is formed into a series of radially extending spokes 66 which together have outer faces 53 that provide the substantially convex surface 60 of the grip element. Inner faces 51 of the spokes 66 together provide the substantially concave surface 58 of the grip element. The outer faces 53 of the spokes 66 do not contact the ribs 52 of the clamping element 24 during use of the attachment device 20. Apart from the engagement of the threaded bore 48 and the threaded post 38, the main contact between the cap 40 and the grip element is around a rim 59 of the cap and the second annular surface 63 of the flange 62 facing towards the cap. The rim 59 is preferably provided at an end of the substantially cylindrical side wall 44. The ribs 52 provide reinforcement between the cap outer wall 44 and the post 50. Overtightening of the clamping element 24, which could result in the suction disc 30 becoming too curved to retain the partial vacuum, is prevented ultimately by contact between an annular end surface 71 of the post and an opposed annular surface 73 of the hub.

The inner faces 51 of the spokes are shaped to accommodate the curvature of the second surface 34 of the suction disc 30 when this is pulled outwards away from the attachment surface 8 upon tightening of the clamping element 24. As tightening progresses, the second surface 34 of the suction disc bulges outwards and pushes the flexible panel 16 in the vicinity of the hole 70 up against the inner faces 51 of the spokes 66. The spokes have therebetween a series of corresponding slots 65 which therefore also extend radially between the hub 57 and inner edge of the flange 62. The slots are apertures 65 extending between the inner and outer faces 51, 53 of the spokes that provide the concave and convex surfaces 58, 60 of the dome-shaped disc 56. Between the inner and outer faces 51, 53 of the spokes, each slot is bounded by a pair of opposed side faces 67 of the spokes, each of which lies in an axial plane, i.e. a plane passing through the longitudinal axis 49 of the assembly.

As the flexible panel 16 in the vicinity of the hole 70 is pushed up against the inner, concave faces 51 of the spokes, edges of the spokes between the inner and side faces 51, 67 begin to engage with the flexible panel, which tends to bulge into the slots 65. The effect of this is an engagement of the flexible panel 16 around the hole 70 with the slots 65 and spokes 66 to prevent relative rotation between the flexible panel and the grip element 26 as the rim 59 of the clamping element 24 bears against the 62 flange to clamp that part of the flexible panel between the anchor element 22 and the clamping element 24.

The flexible panel may, optionally, be made from a polymeric material, for the purposes of rain resistance. Although such materials are not, in general impermeable, it would be possible for such materials to trap air or water. The slots 65 are therefore also adapted to help prevent air or moisture from being trapped between the flexible panel 16 and grip element 26 as tightening progresses, by providing a path for air or moisture to escape into the void within the cap, and ultimately through the seam between the rim and flange, which is not adapted in any way to be air tight.

In order to use the attachment device 20 with a flexible panel 16, a hole 70 must be formed in the panel 16 through which the post 38 of the anchor element 22 can extend. The edges of the hole 70 may be sealed or otherwise treated or covered to reduce the likelihood of the material of the flexible panel 16 tearing in this region.

To use the attachment device 20, the suction disc 30 is pressed onto a suitable smooth surface of the caravan 8 in an appropriate location relative to the edge region 10 of the side panel 16 of the awning 12. It will be appreciated that the suction disc 30 may be applied to any suitable surface such as the outer wall or skin, a window or other rigid structural panel of the caravan 8. With the suction disc 30 attached to the surface of the caravan 8, the threaded post 38 extends away from the surface, and preferably extends in a direction substantially perpendicular to the part of the surface to which the suction disc 30 is attached.

The flexible panel 16 of the awning 12 is then positioned over the anchor element 22 and pushed over the post 38 such that the post 38 extends through the hole 70 in the flexible panel 16. In this position the flexible panel 16 lies against the second surface 34 of the suction disc 30.

The grip element 26 is located over the post 38 such that the post 38 extends through the aperture 64. The grip element 26 is oriented so that the concave surface 58 is adjacent the flexible panel 16 and the convex surface 60 faces away from the suction cup 30 of the anchor element 22.

Finally the clamping element 24 is secured to the anchor element 22 by screwing the cap 40 onto the end of the threaded post 38. As the screw cap 40 is screwed further onto the post 38, the flexible panel 16 is clamped between the flange 62 of the grip element 26 and an outer circumferential region of the suction disc 30. Further rotation of the clamping element 24 about the post 38 causes the central region of the suction disc 30 to be pulled in a direction away from the surface of the caravan 8. This creates or increases a partial vacuum between the first surface 32 of the suction disc 30 in the central region and the surface of the caravan 8, which firmly secures the attachment device 20 to the caravan 8.

It is to be noted that, in this embodiment, the same action of rotating the clamping element 24 with respect to the anchor element 22 both clamps the flexible panel 16 between these elements 22, 24 and secures the anchor element 22 to the caravan 8 by forming the partial vacuum. In other embodiments a similar arrangement may be used in which movement of the clamping element 24 with respect to the anchor element 22 acts both to clamp the flexible panel 16 and to firmly attach the anchor member 22 to the caravan 8.

Preferably, as described above, the clamping element 24 is rotatable with respect to the grip element 26 so that, as the clamping element 24 is rotated about the post 38, the grip element 26 does not move rotationally with respect to the anchor element 22 or the flexible panel 16. This has the advantage that the flexible panel 16 is not creased or twisted by the grip element 26 while it is being clamped.

The configuration of the anchor element 22, grip element 26 and clamping element 24 described means that the flexible panel 16 is gripped most firmly between the flange 62 of the grip element 26 and the suction disc 30 at a distance from the hole 70 in the flexible panel 16. Furthermore, the flexible panel 16, in the vicinity of the attachment device 20, is held so that a plane of the flexible panel 16 is substantially parallel to the plane of the surface to which the attachment device 20 is secured.

Returning to Figures 1 and 2, a plurality of attachment devices 20 are preferably used to secure a length of an edge 10 of a flexible panel 16 to a caravan 8. The attachment devices 20 are spaced apart along the length of the edge 10. Accordingly, a plurality of holes 70 will be provided in the edge region 10 of the flexible panel 16 for receiving the attachment devices 20. As can be seen in Figure 1, the anchor elements 22 may be secured to the outer skin or wall of the caravan 8 or to a window of the caravan 8, so that the flexible panel 16 can be held at any desired location with respect to the side of the caravan 8.

The attachment device(s) 20 of the present invention may be used in addition to a vertical support pole 6 as shown in Figure 2. The vertical support pole 6 may engage with the ground 2 at one end and at the other end be connected to the flexible panel 16 and extended to tension the edge region 10 of the panel 16. Once tensioned, the attachment devices 20 are used to secure the edge region 10 against the side of the caravan 8.

The clamping element 24 may remain permanently connected to the anchor element 22 by means of a strap, cord or hinge member. In these embodiments the means of permanently connecting the clamping element 24 to the anchor element 22 is in addition to and separate from the securing means 28, such that the clamping element 24 may remain connected to the anchor element 22 both in a secured configuration, in which a flexible panel 16 is clamped between the clamping element 24 and the anchor element 22, and an unsecured configuration.

It will be appreciated that although the preceding description has referred to a caravan 8, the attachment device 20 of the present invention may be used to secure a flexible panel of an awning, canopy or other shelter to any suitable rigid structure such as a motorhome, a wall, a building or a boat.

The present invention, therefore, provides an attachment device that allows an edge of a flexible panel of an awning or other shelter to be secured to a rigid structure such as a caravan to assist in creating a weatherproof seal between a part of the shelter and the structure.

Further embodiments of the invention can also be contemplated without departing from the scope of the invention as defined in the appended claims.

## Claims

1. An attachment device (20) for securing a shelter (12) to a rigid structure (8), the shelter (12) comprising a flexible panel (16), and the attachment device (20) comprising:
- an anchor element (22) for securing to a surface of the rigid structure (8), the anchor element (22) comprising a suction disc (30), the suction disc (30) comprising on opposite sides a first surface (32) and a second surface (34), the first surface (32) being configured to create a partial vacuum between the anchor element (22) and said surface whereby, in use, the anchor element (22) is secured to said surface, the anchor element (22) further comprising a projection that extends in a direction away from the surface of the structure (8) when the anchor element (22) is secured to the structure (8);
- a clamping element (24) including means for engaging with the projection to secure the clamping element (24) to the anchor element (22); and
- a grip element (26) located between at least a part of the anchor element (22) and the clamping element (24), the projection extending through an aperture (64) in the grip element (26),
and **characterised in that**:
the grip element (26) comprises a dome-shaped disc (56) to allow a central region of the first surface (32) of the suction disc (30) to be pulled in a direction away from said surface of the structure (8) to create the partial vacuum while an edge region of the first surface (32) remains in contact with said surface of the structure (8), and the grip element (26) further comprises a radial flange (62) that extends from a circumferential edge of the dome-shaped disc (56) and, in use, a part of said flexible panel (16) is clamped between the flange (62) of the grip element (26) and a part of the anchor element (22).

2. An attachment device (20) as claimed in Claim 1, wherein the projection comprises a threaded post (38) and wherein the means for engaging with the projection comprises a threaded recess or bore (48) for receiving and engaging with the threaded post (38) and, in which, the anchor element (22) is for securing to a substantially vertical surface of the rigid structure (8).

3. An attachment device (20) as claimed in any preceding claim, wherein the clamping element (24) is movably connected to the anchor element (22).

4. An attachment device (20) according to Claim 3, wherein movement of the clamping element (24) with respect to the anchor element (22) acts to both clamp the flexible panel (16) and to firmly attach the anchor element (22) to the rigid structure (8).

5. An attachment device (20) as claimed in Claim 2, wherein the clamping element (24) is a cap (40) and the dome-shaped disc (56) has a first, substantially concave surface (58), a second, substantially convex surface (60), and the diameter of an outer edge of the flange (62) is substantially the same as a diameter of the suction disc (30) of the anchor element (22), in which, the flange (62) has opposite first and second annular surfaces (61, 63) and wherein apart from engagement of the threaded bore (48) and the threaded post (38), the main contact between the cap (40) and the grip element (26) is around a rim (59) of the cap (40) and the second annular surface (63) of the flange (62) facing towards the cap (40).

6. An attachment device (20) as claimed in Claim 1, wherein the dome-shaped disc (56) has a first, substantially concave surface (58) and a second, substantially convex surface (60), said concave surface (58) facing the first surface of the suction disc (30) to allow the first surface of the suction disc (30) to be pulled in a direction away from said surface of the structure (8).

7. An attachment device (20) as claimed in Claim 6, wherein the diameter of an outer edge of said flange (62) is substantially the same as a diameter of the suction disc (30).

8. An assembly comprising a shelter (12) including a flexible panel (16) and at least one attachment device (20) for securing the flexible panel (16) to a rigid structure (8), the attachment device (20) being as claimed in any preceding claim and the flexible panel (16) comprising opposite first and second sides, the suction disc (30) being located on the first side of the flexible panel (16), the projection extending through a hole (70) in the flexible panel (16) and the grip element (26) and clamping element (24) being primarily located on the second side of the flexible panel (16).

9. An assembly as claimed in Claim 8, comprising a plurality of attachment devices (20) spaced apart along an edge region (10) of the flexible panel (16), and the flexible panel (16) includes a plurality of holes (70) spaced apart along the edge region (10) of the flexible panel (16), each hole (70) being sized to receive therethrough a projection of a corresponding anchor element (22).

10. A method of securing a flexible panel (16) of a shelter (12) to a rigid structure (8) using at least one attachment device (20), the flexible panel (16) having for the or each attachment device (20) a hole (70) proximate an edge region (10) thereof and the or each attachment device (20) being as claimed in any one of Claims 1 to 7, the method comprising:
- attaching the suction disc (30) of the or each anchor element (22) to a surface of the structure (8);
- locating a part of the flexible panel (16) such that the projection of the or each anchor element (22) extends through a corresponding hole (70) in the flexible panel (16);
- locating the or each grip element (26) over said projection of the or each anchor element (22); and
- engaging the or each clamping element (24) with the corresponding anchor element (22) such that said part of the flexible panel (16) is clamped between the flange (62) of the grip element (26) and an outer circumferential region of the suction disc (30).

## Patentansprüche

1. Befestigungseinrichtung (20) zum Befestigen eines Schutzdaches (12) an einer starren Struktur (8), wobei das Schutzdach (12) ein flexibles Wandelement (16) umfasst, und die Befestigungseinrichtung (20) folgendes umfasst:
- ein Verankerungselement (22) zum Befestigen an einer Oberfläche der starren Struktur (8), wobei das Verankerungselement (2) eine Saugscheibe (30) umfasst, wobei die Saugscheibe (30) auf einander gegenüberliegenden Seiten eine erste Fläche (32) und eine zweite Fläche (34) umfasst, wobei die erste Fläche (32) so eingerichtet ist, dass sie ein partielles Vakuum zwischen dem Verankerungselement (42) und der Oberfläche erzeugen kann, wodurch bei seiner Verwendung das Verankerungselement (22) an der Oberfläche befestigt wird, wobei das Verankerungselement (22) weiter einen Vorsprung umfasst, der sich in einer Richtung weg von der Oberfläche der Struktur (8) erstreckt, wenn das Verankerungselement (22) an der Struktur (8) befestigt wird;
- ein Klemmelement (24), welches ein Mittel zum Eingriff mit dem Vorsprung aufweist, um das Klemmelement (24) am Verankerungselement (42) zu befestigen; und
- ein Griffelement (26), welches sich zwischen wenigstens einem Teil des Verankerungselements (22) und dem Klemmelement (24) befindet, wobei der Vorsprung sich durch eine Öffnung (64) in dem Griffelement (26) erstreckt,
**dadurch gekennzeichnet, dass**
das Griffelement (26) eine kuppelförmige Scheibe (56) umfasst, um einem zentralen Bereich der ersten Fläche (32) der Saugscheibe (30) zu ermöglichen, in eine Richtung weg von der Oberfläche der Struktur (8) gezogen zu werden, um ein partielles Vakuum zu erzeugen, während ein Randbereich der ersten Fläche (32) in Kontakt mit der Oberfläche der Struktur (8) verbleibt, und wobei das Griffelement (26) weiter einen radialen Flansch (62) umfasst, der sich von einem Umfangsrand der kuppelförmigen Scheibe (56) aus erstreckt und wobei im Gebrauchszustand ein Teil des flexiblen Wandelements (16) zwischen dem Flansch (62) des Griffelements (26) und einem Teil des Verankerungselements (22) eingeklemmt ist.

2. Befestigungseinrichtung (20) nach Anspruch 1,
bei welcher der Vorsprung einen Gewindebolzen (38) umfasst, und wobei das Mittel zum Eingriff mit dem Vorsprung eine Gewindeaussparung oder -bohrung (48) zur Aufnahme und zum Eingriff mit dem Gewindebolzen (38) umfasst, und wobei das Verankerungselement (22) zur Befestigung an einer im Wesentlichen vertikalen Oberfläche der starren Struktur (8) dient.

3. Befestigungseinrichtung (20) nach einem der vorigen Ansprüche,
bei welcher das Klemmelement (24) beweglich mit dem Verankerungselement (22) verbunden ist.

4. Befestigungseinrichtung (20) nach Anspruch 3,
bei welcher die Bewegung des Klemmelements (24) relativ zum Verankerungselement (22) sowohl das Klemmen des flexiblen Wandelements (16) als auch das feste Anbringen des Verankerungselements (22) an der starren Struktur (8) bewirkt.

5. Befestigungseinrichtung (20) nach Anspruch 2,
bei welcher das Klemmelement (24) eine Kappe (40) ist und die kuppelförmige Scheibe (56) eine erste, im Wesentlichen konkave, Fläche (58) sowie eine zweite, im Wesentlichen konvexe, Fläche (60) aufweist und der Durchmesser eines äußeren Randes des Flansches (62) im Wesentlichen derselbe ist wie der Durchmesser der Saugscheibe (30) des Verankerungselements (22), wobei der Flansch (62) eine erste und eine gegenüberliegende zweite ringförmige Fläche (61, 63) aufweist und wobei neben dem Ineinandergreifen der Gewindebohrung (48) und dem Gewindebolzen (38) der wesentliche Kontakt zwischen der Kappe (40) und dem Griffelement (26) um eine ringförmige Stirnfläche (59) der Kappe (40) herum erfolgt und die zweite ringförmige Fläche (63) des Flansches (62) in Richtung der Kappe (40) weist.

6. Befestigungseinrichtung (20) nach Anspruch 1,
bei welcher die kuppelförmige Scheibe (56) eine erste, im Wesentlichen konkave, Fläche (58) und eine zweite, im Wesentlichen konvexe, Fläche (60) aufweist, wobei die konkave Fläche (58) der ersten Fläche der Saugscheibe (30) zugewandt ist, um zu ermöglichen, dass die erste Fläche der Saugscheibe (30) in eine Richtung weg von der Oberfläche der Struktur (8) gezogen werden kann.

7. Befestigungseinrichtung (20) nach Anspruch 6,
bei welcher der Durchmesser eines äußeren Randes des Flansches (62) im Wesentlichen derselbe ist wie der Durchmesser der Saugscheibe (30).

8. Anordnung, umfassend ein Schutzdach (12), welches ein flexibles Wandelement (16) und wenigstens eine Befestigungseinrichtung (20) zum Befestigen des flexiblen Wandelements (16) an einer starren Struktur (8) aufweist, wobei die Befestigungseinrichtung (20) nach einem der vorherigen Ansprüche ausgebildet ist und das flexible Wandelement (16) eine erste und eine dieser gegenüberliegende zweite Seite aufweist, wobei die Saugscheibe (30) sich auf der ersten Seite des flexiblen Wandelements (16) befindet, wobei der Vorsprung sich durch ein Loch (70) in dem flexiblen Wandelement (16) erstreckt und das Griffelement (26) und das Klemmelement (24) vorrangig auf der zweiten Seite des flexiblen Wandelements (16) angeordnet sind.

9. Anordnung nach Anspruch 8,
welche eine Mehrzahl Befestigungseinrichtungen (20) umfasst, die entlang eines Randbereichs (10) des flexiblen Wandelements (16) voneinander beabstandet angeordnet sind, und wobei das flexible Wandelement (16) eine Mehrzahl Löcher (70) aufweist, die entlang des Randbe-reichs (10) des flexiblen Wandelements (16) voneinander beabstandet sind, wobei jedes Loch (70) so bemessen ist, dass es hierdurch einen Vorsprung eines entsprechenden Verankerungselements (22) aufnehmen kann.

10. Verfahren zur Befestigung eines flexiblen Wandelements (16) eines Schutzdaches (12) in einer starren Struktur (8), bei welchem wenigstens eine Befestigungseinrichtung (20) verwendet wird, wobei das flexible Wandelement (16) in der Nähe seines Randbereichs (10) für die oder jede Befestigungseinrichtung (20) ein Loch (70) aufweist, und wobei die oder jede Befestigungseinrichtung (20) nach einem der Ansprüche 1-7 ausgebildet ist, wobei das Verfahren folgendes umfasst:
- die Saugscheibe (30) von dem oder jedem Verankerungselement (22) wird an einer Oberfläche der Struktur (8) angebracht;
- ein Teil des flexiblen Wandelements (16) wird so angeordnet, dass der Vorsprung des oder jedes Verankerungselements (22) sich durch ein entsprechendes Loch (70) in dem flexiblen Wandelement (16) erstreckt;
- das oder jedes Griffelement (26) wird über dem Vorsprung des oder jedes Verankerungselements (22) angeordnet; und
- das oder jedes Klemmelement (24) wird mit dem entsprechenden Verankerungselement (22) derart in Eingriff gebracht, dass der Teil des flexiblen Wandelements (16) zwischen dem Flansch (62) des Griffelements (26) und einem äußeren Umfangsbereich der Saugscheibe (30) eingeklemmt wird.

## Revendications

1. - Dispositif de fixation (20) pour fixer un abri (12) à une structure rigide (8), l'abri (12) comprenant un panneau souple (16), et le dispositif de fixation (20) comprenant :
- un élément d'ancrage (22) à fixer à une surface de la structure rigide (8), l'élément d'ancrage (22) comprenant une ventouse (30), la ventouse (30) comprenant, sur des côtés opposés, une première surface (32) et une seconde surface (34), la première surface (32) étant configurée pour créer un vide partiel entre l'élément d'ancrage (22) et ladite surface, ce par quoi, en utilisation, l'élément d'ancrage (22) est fixé à ladite surface, l'élément d'ancrage (22) comprenant en outre une saillie qui s'étend dans une direction s'éloignant de la surface de la structure (8) lorsque l'élément d'ancrage (22) est fixé à la structure (8) ;
- un élément de serrage (24) comprenant des moyens pour s'engager avec la saillie de façon à fixer l'élément de serrage (24) à l'élément d'ancrage (22) ; et
- un élément de saisie (26) situé entre au moins une partie de l'élément d'ancrage (22) et l'élément de serrage (24), la saillie s'étendant à travers une ouverture (64) dans l'élément de saisie (24),
et **caractérisé par le fait que** :
l'élément de saisie (26) comprend un disque en forme de dôme (56) pour permettre à une région centrale de la première surface (32) de la ventouse (30) d'être tirée dans une direction s'éloignant de ladite surface de la structure (8) pour créer le vide partiel tandis qu'une région de bord de la première surface (32) reste en contact avec ladite surface de la structure (8), et l'élément de saisie (26) comprend en outre une bride radiale (62) qui s'étend à partir d'un bord circonférentiel du disque en forme de dôme (56) et, en utilisation, une partie dudit panneau souple (16) est serrée entre la bride (62) de l'élément de saisie (26) et une partie de l'élément d'ancrage (22).

2. - Dispositif de fixation (20) selon la revendication 1, dans lequel la saillie comprend une tige filetée (38) et les moyens pour s'engager avec la saillie comprennent un alésage ou évidement fileté (48) pour recevoir et s'engager avec la tige filetée (38), et dans lequel l'élément d'ancrage (22) est destiné à être fixé à une surface sensiblement verticale de la structure rigide (8) .

3. - Dispositif de fixation (20) selon l'une quelconque des revendications précédentes, dans lequel l'élément de serrage (24) est relié de manière mobile à l'élément d'ancrage (22).

4. - Dispositif de fixation (20) selon la revendication 3, dans lequel un mouvement de l'élément de serrage (24) par rapport à l'élément d'ancrage (22) agit à la fois pour serrer le panneau souple (16) et pour fixer fermement l'élément d'ancrage (22) à la structure rigide (8) .

5. - Dispositif de fixation (20) selon la revendication 2, dans lequel l'élément de serrage (24) est un capuchon (40) et le disque en forme de dôme (56) a une première surface sensiblement concave (58), une seconde surface sensiblement convexe (60) et le diamètre d'un bord externe de la bride (62) est sensiblement le même qu'un diamètre de la ventouse (30) de l'élément d'ancrage (22), dans lequel la bride (62) a des première et seconde surfaces annulaires opposées (61, 63) et dans lequel, à part l'engagement de l'alésage fileté (48) et de la tige filetée (38), le contact principal entre le capuchon (40) et l'élément de saisie (26) est autour d'un rebord (59) du capuchon (40) et de la seconde surface annulaire (63) de la bride (62) faisant face au capuchon (40).

6. - Dispositif de fixation (20) selon la revendication 1, dans lequel le disque en forme de dôme (56) a une première surface sensiblement concave (58) et une seconde surface sensiblement convexe (60), ladite surface concave (58) faisant face à la première surface de la ventouse (30) pour permettre à la première surface de la ventouse (30) d'être tirée dans une direction s'éloignant de ladite surface de la structure (8).

7. - Dispositif de fixation (20) selon la revendication 6, dans lequel le diamètre d'un bord externe de ladite bride (62) est sensiblement le même qu'un diamètre de la ventouse (30).

8. - Ensemble comprenant un abri (12) comportant un panneau souple (16) et au moins un dispositif de fixation (20) pour fixer le panneau souple (16) à une structure rigide (8), le dispositif de fixation (20) étant selon l'une quelconque des revendications précédentes et le panneau souple (16) comportant des premier et second côtés opposés, la ventouse (30) étant située sur le premier côté du panneau souple (16), la saillie s'étendant à travers un trou (70) dans le panneau souple (16), et l'élément de saisie (26) et l'élément de serrage (24) étant principalement situés sur le second côté du panneau souple (16) .

9. - Ensemble selon la revendication 8, comprenant une pluralité de dispositifs de fixation (20) espacés le long d'une région de bord (10) du panneau souple (16), et le panneau souple (16) comprend une pluralité de trous (70) espacés le long de la région de bord (10) du panneau souple (16), chaque trou (70) étant dimensionné pour recevoir, à travers celui-ci, une saillie d'un élément d'ancrage correspondant (22).

10. - Procédé de fixation d'un panneau souple (16) d'un abri (12) à une structure rigide (8) à l'aide d'au moins un dispositif de fixation (20), le panneau souple (16) ayant, pour le ou chaque dispositif de fixation (20), un trou (70) à proximité d'une région de bord (10) de celui-ci et le ou chaque dispositif de fixation (20) étant selon l'une quelconque des revendications 1 à 7, le procédé comprenant :
- fixer la ventouse (30) du ou de chaque élément d'ancrage (22) à une surface de la structure (8) ;
- placer une partie du panneau souple (16) de telle sorte que la saillie du ou de chaque élément d'ancrage (22) s'étend à travers un trou correspondant (70) dans le panneau souple (16) ; et
- placer le ou chaque élément de saisie (26) sur ladite saillie du ou de chaque élément d'ancrage (22) ; et
- engager le ou chaque élément de serrage (24) avec l'élément d'ancrage correspondant (22) de telle sorte que ladite partie du panneau souple (16) est serrée entre la bride (62) de l'élément de saisie (26) et une région circonférentielle externe de la ventouse (30).
